# EUROPEAN PATENT APPLICATION

(11) **EP 1 844 656 A1**
(43) Date of publication of application: **17.10.2007**
(21) Application number: 06112513.4
(22) Date of filing: 12.04.2006
(51) Int. Cl.: A01P 21/00, A01N 59/06, A01N 59/14, A01N 59/16, A01N 59/20, A01N 25/26

(54) **Use of nanoparticles for increasing the Red to Far Red-ratio**

(71) Applicant: Ciba Specialty Chemicals Holding Inc., 4057 Basel (CH); Ciba Specialty Chemicals S.p.A., 40037 Sasso Marconi (BO) (IT)
(72) Inventor: Lorenzetti, Cesare, 63013 Grottammare (AP) (IT); Vitale, Marcello, 40038 Vergato (BO) (IT)

(57) **Abstract**

The present invention relates to the use of nanoparticles for increasing the "Red to Far Red"-ratio (Red/Far Red-ratio). The nanoparticles are used in polymeric films for agricultural applications.

## Description

The present invention relates to the use of nanoparticles for increasing the "Red to Far Red"-ratio (Red/Far Red-ratio). The nanoparticles are dispersed in a matrix. The preferred matrix system is a polymeric material, especially a polyethylene.

Plants use light as a source of energy as well as a signal to direct their growth. Light used for energy is that falling with the Photosynthetically Active Radiation (PAR) region, defined as all photons between 400 and 700 nm. One of the most important and best known light measured used by plants to regulate their growth is the ratio of Red (600 - 700 nm) to Far Red (700 - 800 nm). Many attempts have been made to impact positively these inputs to plant growth by manipulating natural light passing through coverings such as those employed in greenhouses and tunnels, or reflecting by mulching sheets. One straightforward strategy is the selective absorption of light in one of those regions. Absorbing Far Red light more than Red light, for example, would increase the Red/Far Red-ratio affecting plant growth in a positive way. This is known from the literature as well from US 3'542'710 and EP732'049.

Until now, many types of colorants have been used to achieve such a Red/Far Red-ratio increase. Especially phthalocyanines have been used widely. Other Near Infrared Red (NIR)-absorbing compounds, such as quaterrylens (for example BASF Lumogen IR family) could be used. Such NIR-absorbing compounds are described in US 5'405'962 and US6'124'458. However, the technologies employed until now have either lacked sufficient photo or thermal stability for prolonged outdoor use and/or impacted significantly and negatively PAR transmission, decreasing the amount of light energy available to crops.

Therefore the aim of the present invention was to provide compounds, which do not have the above mentioned disadvantages.

The present invention covers a wholly different chemical approach to light-quality modification for improving plant growth, which solves both of the above-mentioned shortfalls, namely nanoparticles which, for their particular combination of size and electrical properties, present very intensive absorption in the NIR region and pellucid in the visible.

Therefore the present invention relates to the use of nanoparticles, which increase the "Red to Far Red"-ratio of at least 10%. Preferred is the use of nanoparticles, which increases the "Red to Far Red"-ratio of at least 15%.
It must be stated that the increase of the "Red to Far Red"-ratio is also given after a long duration of an outdoor use. For the present invention the outdoor use is simulated by the experimental use of an Atlas Wheather-O-Meter (WOM, dry cycle) operating with a xenon lamp (power flux of 0.35W/m² at 340 nm).
The present invention also relates to the use of nanoparticles increasing the "Red to Far Red"-ratio of at least 10% after the exposure in a "Red to Far Red""-ratio Atlas Wheather-O-Meter (xenon lamp; power flux of 0.35W/m² at 340 nm) for 100 hours.
The exact experimental conditions are given in the examples hereinafter.
Preferred is a use of nanoparticles increasing the "Red to Far Red"-ratio of at least 10% after the exposure in a "Red to Far Red"-ratio Atlas Wheather-O-Meter (xenon lamp; power flux of 0.35W/m² at 340 nm) for 300 hours.

The present invention also relates to a use as described above, wherein the nanoparticles have a size from about 0.5 nm to 500 nm.

Preferred is a use as described above, wherein the nanoparticles have size from 1 to 500 nm.

Preferred is a use as described above, wherein the nanoparticles have at least one absorption maximum between 700 and 1500 nm and no absorption maximum between 400 and 700 nm.

The present invention also relates to a use as described above, wherein the nanoparticles have at least one emission maximum between 600 nm and 700 nm.

The present invention also relates to a use as described above wherein the nanoparticles are made of inorganic materials.

Preferably, the present invention further relates to a use as described above, wherein the nanoparticles are made of a combination of
(i) at least one metallic chemical element and/or alloy of metal chemical elements and
(ii) at least one chemical element of the main groups III, IV, V, VI and VII of the Periodic Table and/or an alloy of chemical elements of the main group III, IV, V, VI and VII of the Periodic Table.

Preferably, the present invention relates to a use as described above, wherein the metallic chemical element or alloy of metal chemical elements (i) are chosen from the group consisting of Ag, La, Mg and others.

Preferably, the present invention related to a use as described above, wherein the chemical element of the main group III, IV, V, VI and VII and/or alloys of these chemical elements are chosen from the group consisting of Al, B, Ga and others of said main groups

The especially preferred nanoparticles are hexaboride components represented by XB₆, wherein X is at least one element selected from La, Ce, Pr, Nd, Gd, Tb, Dy, Ho, Y, Sm, Eu, Er, Tm, Yb, Lu, Sr and Ca.
Mostly preferred as a nanoparticle is LaB₆.
These components are disclosed in US2004/0028920

The present invention further relates to a use as described above, wherein the nanoparticles are dispersed in a matrix.

Preferably, the present invention also relates to a use as described above, wherein the matrix is a metal, metal alloy, ceramic material, layered material, microporous material, paint base, varnish base, coatings, thermoplastic polymer composition, inorganic glass, forming plates, fibers and film.

Another preferred embodiment comprises the nanoparticles which are dispersed in polyolefines. Suitable polyolefines include the following polymers:

1. Polymers of monoolefins and diolefins, for example polypropylene, polyisobutylene, polybut-1-ene, poly-4-methylpent-1-ene, polyisoprene or polybutadiene, as well as polymers of cycloolefins, for instance of cyclopentene or norbornene, polyethylene (which optionally can be crosslinked), for example high density polyethylene (HDPE), high density and high molecular weight polyethylene (HDPE-HMW), high density and ultrahigh molecular weight poly-ethylene (HDPE-UHMW), medium density polyethylene (MDPE), low density polyethylene (LDPE), linear low density polyethylene (LLDPE), (VLDPE) and (ULDPE).

Polyolefins, i.e. the polymers of monoolefins exemplified in the preceding paragraph, preferably polyethylene and polypropylene, can be prepared by different, and especially by the following, methods:
a) radical polymerisation (normally under high pressure and at elevated temperature).
b) catalytic polymerisation using a catalyst that normally contains one or more than one metal of groups IVb, Vb, VIb or VIII of the Periodic Table. These metals usually have one or more than one ligand, typically oxides, halides, alcoholates, esters, ethers, amines, alkyls, alkenyls and/or aryls that may be either pi - or sigma-coordinated. These metal complexes may be in the free form or fixed on substrates, typically on activated magnesium chloride, titanium (III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups Ia, IIa and/or IIIa of the Periodic Table. The activators may be convenientlymodified with further ester, ether, amine or silyl ether groups. These catalyst systems are usually termed Phillips, Standard Oil Indiana, Ziegler (-Natta), TNZ (DuPont), metallocene or single site catalysts (SSC).

2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).

3. Polyolefin copolymers: Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, propylene/butadiene copolymers, isobutylene/isoprene copolymers, ethylene/alkyl acrylate copolymers, ethylene/alkyl methacrylate copolymers, ethylene/vinyl acetate copolymers and their copolymers with carbon monoxide or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof with other polymers, for example polyamides.

Polyesters to be used for manufacturing the articles of present invention are mainly those derived from dicarboxylic acids and diols and/or from hydroxycarboxylic acids or the corresponding lactones, for example polyethylene terephthalate, polybutylene terephthalate, poly-1,4-dimethylolcyclohexane terephthalate, polyalkylene naphthalate (PAN) and polyhydroxybenzoates, as well as block copolyether esters derived from hydroxyl-terminated polyethers; and also polyesters modified with polycarbonates or MBS. Preferred is polyethylene terephthalate (PET).

Polyamides are usually those derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexame- thylene terephthalamide or poly-m-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).

Most preferred are polyolefines such as polyethylene, especially LDPE or LLDPE, or polypropylene.

A further preferred use according to the present invention is characterized in that the weight ratio of nanoparticles to matrix materials is from 0.001:1 to 0.2:1.

As methods of dispersing the fine nanoparticles in the thermoplastic resin, any methods may be selected as long as they are methods by which the fine nanoparticles can uniformly be dispersed in the resin. For example, a method may be used in which the fine nanoparticles are dispersed in any desired solvent by means of a bead mill, a ball mill or a sand mill or by ultrasonic dispersion to prepare a dispersion of the fine nanoparticles, and this dispersion and powder or pellets of the thermoplastic resin, optionally together with other additive(s), are uniformly melt-mixed by means of a mixing machine such as a ribbon blender, a tumbling mixer, a Nauta mixer, a Henschel mixer, a super mixer or a planetary-screw mixer and a kneading machine such as a Banbury mixer, a kneader, a roll mill, a single-screw extruder or a twin-screw extruder while removing the solvent, thus a mixture can be prepared in which the fine nanoparticles have uniformly been dispersed in the thermoplastic resin. The mixture in which the fine nanoparticles have uniformly been dispersed in the thermoplastic resin may also be prepared by a method in which the solvent in the dispersion of the nanoparticles are removed by a known method and the powder obtained and the powder or pellets of the thermoplastic resin, optionally together with other additive(s), are uniformly melt-mixed. Besides, a method may be used in which powder of the fine nanoparticles having not been subjected to dispersion treatment is directly added to the thermoplastic resin and these are uniformly melt-mixed. It may suffice for the fine hexaboride particles to be uniformly dispersed in the thermoplastic resin, and methods are not limited to these.

As the shape of the final covering material, the resin form may be formed in any shape as desired, and may be in a flat shape or a curved shape. It may be set to any desired thickness according to what is necessary for the shapes of a plate and up to a film. A resin sheet formed in a flat shape may be formed by post working in any desired shape such as a spherical shape.

As methods of forming, any methods such as injection molding, extrusion, compression molding and rotary molding are available. In particular, a method of obtaining the form by injection molding and a method of obtaining the form by extrusion may preferably be employed. As a method of obtaining a sheet- or platelike or filmlike form by the extrusion, such a form is produced by a method in which a molten thermoplastic resin extruded using an extruder such as a T-die is taken off while being cooled by means of a cooling roll. Forms obtained by the injection molding are preferably used in the bodies of cars such as window glass and roofs of automobiles. Sheet- or platelike or filmlike forms obtained by the extrusion are preferably used in constructions such as arcades and carports.

The matrix may further contain any of commonly available additives. For example, usable as additives are dyes or pigments such as ago dyes, cyanine dyes, quinoline dyes, perylene dyes and carbon black which are commonly used to color thermoplastic resins in order to impart any desired color tones as occasion calls; as well as hindered-phenol type or phosphorus type stabilizers; release agents; hydroxybenzophenone type, salicylic acid type, HALS type, triazole type or triazine type ultraviolet absorbers; coupling agents; surface-active agents; antistatic agents and so forth; any of which may be mixed in an effective quantity.

The following examples describe certain embodiments of this invention, but the invention is not limited thereto. It should be understood that numerous changes to the disclosed embodiments could be made in accordance with the disclosure herein without departing from the spirit or scope of the invention. These examples are therefore not meant to limit the scope of the invention. Rather, the scope of the invention is to be determined only by the appended claims and their equivalents. In these examples all parts given are by weight and the temperatures are given in degree Celsius unless otherwise indicated.

### Example 1

Nanoparticles based on LaB₆ were tested, which were obtained from Sumitomo Metal Mining as a 0.25% concentrate in LDPE (commercial name: KHES-02S, described in US2004/0028920). They are spheres of particle size between 10 and 80 nm. Two samples of different concentrations (20% and 30% w/w of master, corresponding respectively to 0.05% and 0.075 % in nanoparticles) were prepared.
As comparative samples there were tested:
a phthalocyanine derivative with intense NIR absorption, Irgaphor Ultragreen MX, produced by Ciba Specialty Chemicals Inc. It increases the Red / Far Red ratio by acting on the denominator.
Smartlight RL 1000, a luminescent pigment which transforms ultraviolet into red light, also produced by Ciba Specialty Chemicals Inc. It increases the Red / Far Red ratio by acting, instead, on the numerator.

All these compounds were incorporated along with other standard components in 150 microns LDPE blown films. The films were produced using a FORMAC laboratory blow extruder.

Table 1 shows the composition of the inventive and comparative films

**Table 1: samples compositions**

| Sample id. | w/w % | | w/w % | | w/w % | |
|---|---|---|---|---|---|---|
| 1 (invention) | 20 | master KHES-02S (LaB6) | 0.8 | Tinuvin NOR 371 | 0.2 | TINUVIN 327 |
| 2 (invention) | 30 | master KHES-02S (LaB6) | 0.8 | Tinuvin NOR 371 | 0.2 | TINUVIN 327 |
| 3 (Comparative) | 0.02 | Irgaphor Ultragreen | 0.8 | Tinuvin NOR 371 | 0.3 | TINUVIN 326 |
| 4 (comparative) | 1 | Smartlight RL1000 | 0.8 | Tinuvin NOR 371 | | |

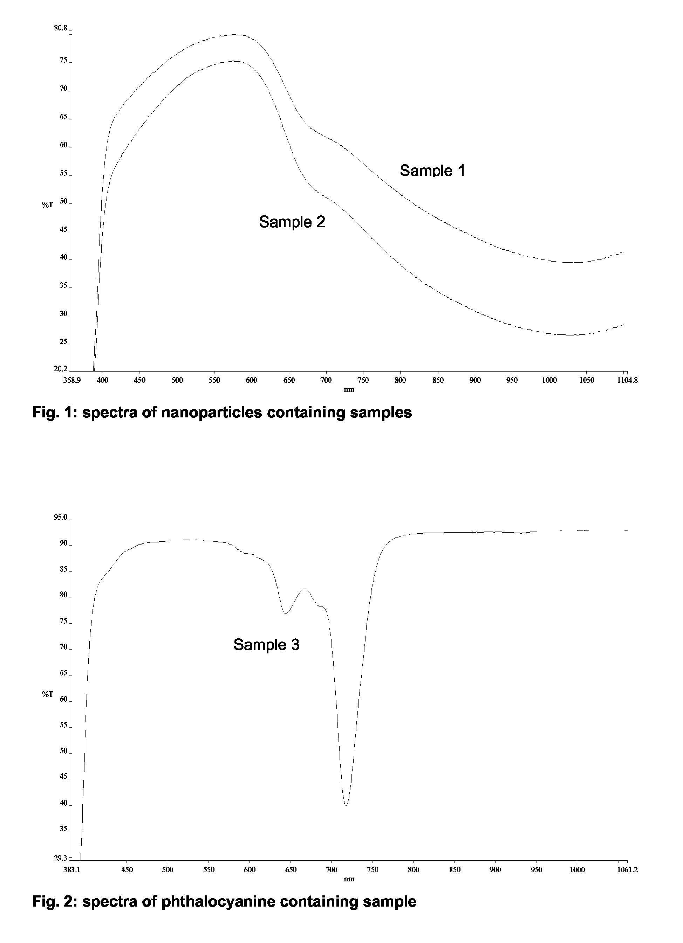

The spectra of the NIR-absorbing feature and comparative samples are shown in Fig. 1 and 2. It can be seen that the LaB₆ nanoparticles absorb strongly above 700 nm, but do not present any absorption maximum between 400 and 700 nm (maximum transmittance is not 100% mostly because of reflection from the plastic film surface).

Sheets of each composition were exposed in an Atlas Wheather-O-Meter (WOM, dry cycle) operating with a xenon lamp (power flux of 0.35W/m2 at 340 nm); periodically Red/Far Red Ratio and retained NIR absorbance or residual emission intensity were measured, respectively for samples 1-3 and sample 4. Red/Far Red Ratio was measured using a SKR 110 660/730 sensor, made by Skye Instruments Limited, placed inside a frame entirely covered by the plastic sample. Measures were always made at about 11 AM, at roughly 44 degrees of latitude in Pontecchio Marconi, Italy. Comparative measures without a cover or with a cover of unadditivated LDPE yield values of about 1.00. Absorbance spectra were measured using a Perkin Elmer Lambda 35 UV/Vis spectrometer, equipped with an integrating sphere. Luminescence spectra were measured with a Perkin Elmer LS55 Luminescence spectrometer, at 90 degrees observation geometry.

Table 2 shows the relative residual effective additive concentration in the WOM-exposed LDPE sheets, estimated via the absorbance measured at the absorbance maximum of each sample after varying amounts of exposure (samples 1-3) or via the residual emission intensity at the emission maximum (sample 4). Table 3 shows the Red/Far Red ratio after varying amounts of exposure.

**Table 2: relative residual effective additive measured as NIR residual absorbance**

| Sample id. | Hours in WOM | | | | |
|---|---|---|---|---|---|
| | 0 | 107 | 300 | 565 | 1070 |
| 1 (broad absorption peak at 1030 nm) | 100% | 98.8% | 98.1 % | 97.9% | 97.9% |
| 2 (broad absorption peak at 1030 nm) | 100% | 99% | 98.5% | 98.5% | 98.5% |
| 3 (sharp absorption peak at 718 nm) | 100% | 60.7% | 20.7% | 13.5% | 13.3% |
| 4 (emission between 600-700 nm) | 100% | 61% | 47% | 42% | 40% |

**Table 3: Red/Far Red ratio (natural value ≈ 1)**

| Sample id. | Hours in WOM | | | | |
|---|---|---|---|---|---|
| | 0 | 107 | 300 | 565 | 1070 |
| 1 (broad peak at 1030 nm) | 1.26 | 1.27 | 1.26 | 1.27 | 1.27 |
| 2 (broad peak at 1030 nm) | 1.36 | 1.35 | 1.38 | 1.38 | 1.38 |
| 3 (sharp peak at 718 nm) | 1.38 | 1.18 | 1.06 | 1.00 | - |
| 4 (emission between 600-700 nm) | 1.24 | 1.14 | 1.11 | 1.10 | 1.09 |

## Claims

1. Use of nanoparticles for increasing the "Red to Far Red"-ratio of at least 10%.

2. Use according to claim 1, wherein the nanoparticles have a size from about 0.5 nm to 500 nm.

3. Use according to claim 1, wherein the nanoparticles have a size from 1 to 500 nm.

4. Use according to anyone of claim 1 to 3, wherein the nanoparticles have at least one absorbtion maximum between 700 and 1500 nm and no absorption maximum between 400 and 700 nm.

5. Use according to anyone of claims 1 to 3, wherein the nanoparticles have at least one emission maximum between 600 nm and 700 nm.

6. Use according to anyone of the preceding claims wherein the nanoparticles are made of inorganic materials.

7. Use according to claim 6, wherein the nanoparticles are made of a combination of
(i) at least one metallic chemical element and/or alloy of metal chemical elements and
(ii) at least one chemical element of the main group III, IV, V, VI and VII of the Periodic Table and/or an alloy of chemical elements of the main group III, IV, V, VI and VII of the Periodic Table.

8. Use according to claim 7, wherein the metallic chemical element or alloy of metal chemical elements are chosen from the group consisting of Ag, La, Mg and others.

9. Use accoding to claim 7, wherein the chemical element of the main group III, IV, V, VI and VII of the Periodic Table and/or alloys of these chemical elements are chosen from the group consisting of Al, B, Ga and others.

10. Use according to anyone of the preceding claims, wherein the nanoparticles are dispersed in a matrix.

11. Use according to claim 10, wherein the matrix is a metal, metall alloy, ceramic material, layered material, microporous material, paint base, varnish base, coatings, thermoplastic polymer compostion, inorganic glass, forming plates, fibers, or film.

12. Use according to anyone of claims 10 or 11, wherein the weight ratio of nanoparticles to matrix materials is from 0.001:1 to 0.2:1.

13. Use of the nanoarticles according to anyone of the preceding claims in covering material for plant control.
